(19) Europäisches Patentamt
European Patent Office
Office européen des brevets

(11) Publication number: 0 029 620 A1

# (12) EUROPEAN PATENT APPLICATION

(21) Application number: 80200989.4

(22) Date of filing: 20.10.80

(51) Int. Cl.$^3$: C 08 J 7/04
C 08 J 5/18, C 08 G 63/68
C 08 J 3/00, G 03 C 1/80
G 03 C 1/78

(30) Priority: 19.11.79 GB 7939893

(43) Date of publication of application: 03.06.81 Bulletin 81/22

(84) Designated Contracting States: BE DE FR GB IT

(71) Applicant: AGFA-GEVAERT naamloze vennootschap
Septestraat 27
B-2510 Mortsel(BE)

(72) Inventor: De Winter, Walter Frans
Parklaan 11
B-2232 's-Gravenwezel(BE)

(72) Inventor: Van Paesschen, August Jean
St. Vincentiusstraat 6
B-2000 Antwerpen(BE)

(72) Inventor: Van Gossum, Lucien Janbaptist
Verbrandehoevestraat 4
B-2550 Kontich(BE)

(72) Inventor: Van Thillo, Etienne Adrianus
Heikantlaan 28
B-2190 Essen(BE)

(72) Inventor: Marien, August Marcel
Asterlaan 6
B-2431 Oevel(BE)

## (54) Aqueous copolyester dispersions suited for the subbing of polyester film, subbed polyester film and photographic materials containing a subbed polyester base.

(57) An aqueous copolyester dispersion suitable for the subbing of polyester film without the use of solvents, is characterized in that the copolyester essentially consists of recurring ester groups derived from ethylene glycol and a mixture of terephthalic acid, isophthalic acid and sulphoisophthalic acid whose sulpho group is in salt form, the said acid mixture containing from 20 to 60 mole % of isophthalic acid and from 6 to 10 mole % of said sulphoisophthalic acid, the remainder being terephthalic acid, the copolyester having a glass transition temperature above 45°C and an intrinsic viscosity of from 0.15 to 0.45 dl/g when measured at 25°C in a mixture of phenol/o-dichlorobenzene (60/40 by volume). The sulpho-salt group of the sulphoisophthalic acid may be an alkali metal or onium salt. The aqueous dispersion may be coated onto the polyester film before longitudinal stretching thereof.

EP 0 029 620 A1

Aqueous copolyester dispersions suited for the subbing of polyester film, subbed polyester film and photographic materials containing a subbed polyester base.

The present invention relates to aqueous copolyester dispersions suited for the subbing of polyester film, subbed polyester film and photographic materials containing a subbed polyester base.

In order to ensure a good adhesion of a hydrophilic layer such as a photographic gelatin - silver halide emulsion layer to a polyester film support, adhesive layers known as subbing layers are applied between the support and the emulsion layer. In most cases two intermediate layers are needed. The first adhesive layer is coated directly onto the support and is normally called "primer layer". The second adhesive layer coated onto the primer layer is normally a subbing layer containing a great deal of hydrophilic colloid such as gelatin.

To give a sufficiently high dimensional stability and mechanical strength to the polyester film support it is necessary, as is generally known, to orient the film biaxially and to heat-set it at relatively high temperature. This biaxial orienting can be performed by subjecting the film simultaneously to a longitudinal and transversal stretching, usually, however, by stretching the film first in one direction and afterwards in a direction perpendicular to the first. In practice, the longitudinal stretching is carried out first. This stretching of the film up to 3 to 5 times the original dimensions is performed at a temperature comprised between the glass transition temperature and the softening temperature of the polyester. In the case of films of polyethylene terephthalate the stretching is usually performed between 80° and 90°C.

After the biaxial stretching the film is conducted through a heat-setting zone wherein the film is heated until

a temperature between 180° and 220°C is reached, the film being kept under tension in both directions. In this way a dimensionally stable fully clear polyester film is obtained.

The method usually applied for coating the above-mentioned two layers comprises the application of an aqueous solution or dispersion of a resin or mixture of resins between the longitudinal stretching and the transversal stretching of the polyester support to form the primer layer, and the application of a gelatin-containing subbing layer after the film support carrying the primer layer has been stretched transversally and heat-set.

The technique of using an aqueous copolyester dispersion for forming a primer layer has been described in the published German Patent Application (DE-OS) 2,813,014 of John R.Allison and Charles A.Hewitt, issued November 12,1957.

The copolyesters described therein have been modified so that they carry free acid groups e.g. carboxyl and sulpho groups. In a particular embodiment subbing proceeds by coating a polyester support with a 30% by weight aqueous dispersion of a copolyester produced from isophthalic acid,diethylene glycol and a sulphoderivative of a dicarboxylic acid such as sulphoterephthalic acid or sulphoisophthalic acid. This copolyester is sold under the trade name "EASTMAN WD SIZE" and has a glass transition temperature (Tg) of 37°C.

Other aqueous dispersions containing solvent-soluble linear copolyesters modified with a sulphonated aromatic compound, which on a total of 100% (molar) acid equivalents includes from about 0.1% (molar) to about 10% (molar) equivalents of sulphonated aromatic compound, are described in the United States Patent Specification 3,563,942 of Philip Heiberger, issued February 16, 1971.

One process disclosed in said US-Specification for producing a dispersion in water of said solvent-soluble linear copolyesters is by post-emulsification. Post-emulsification is accomplished by dissolving the solid copolyesters in an organic solvent, adding water and a surfactant to the solution to form an emulsion, and then evaporating the organic solvent. So,this technique of making a dispersion still does not exclude the use of solvents, which may pose fire hazards, may have toxic properties and are rather expensive.

It would therefore be particularly advantageous if in the preparation of the copolyester dispersions the use of these solvents could be excluded and nevertheless dispersions could be obtained that still meet the special requirements for their use as primer layer on a polyester film base such as high resin concentration of the coating composition without too high a viscosity preferably below 10 mPa.s at 20°C, sufficient adhesion of the coated primer layer towards the polyester film base and later on towards the second intermediate layer or directly to a gelatino-silver halide emulsion layer, and good optical clearness.

It has now been found according to the invention that stable aqueous copolyester dispersions suitable for application as a subbing layer on polyester film without use of organic solvents can be prepared with a copolyester essentially consisting of recurring ester groups derived from ethylene glycol and a mixture of terephthalic acid, isophthalic acid and sulphoisophthalic acid whose sulpho group is in salt form, wherein said acid mixture contains from 20 to 60 mole % of isophthalic acid and from 6 to 10 mole % of said sulphoisophthalic acid, the remainder being terephthalic acid; the copolyester has a glass transition temperature above 45°C and an intrinsic viscosity of from 0.15 to 0.45 dl/g when measured at 25°C in a mixture of phenol/o-dichlorobenzene (60/40 by volume).

The synthesis of the above mentioned copolyester can proceed by the common two-step preparation technique for polyesters viz. by esterification starting from the free carboxylic acids and polycondensation, or by transesterification and polycondensation.

The sulphoisophthalic acid is not used as such in the

synthesis but as sulpho salt particularly containing the group $-SO_3M$ wherein M is an alkali metal or an onium group e.g. ammonium and organic onium.

As is well known, the formation of an ester from an alcohol and an acid is a condensation reaction whose stoichiometry is 1/1 on a molar basis. In practice, however, an amount of dihydric alcohol, in this instance ethylene glycol is used in excess up to 70 to 100 molar % in the reaction mixture which excess is distilled off during esterification and polycondensation.

The polycondensation proceeds advantageously in the melt of reactants in the presence of a catalyst used for that reaction, e.g. zinc acetate-dihydrate and antimony (III) oxide, as described for example in United States Patent Specification 3,054,703 of Donald Eugene Brasure, issued September 18, 1962.

The particular proportions of sulpho groups and the degree of condensation, i.e. intrinsic viscosity provide the required dispersibility in water of the copolyester.

Particularly stable aqueous copolyester dispersions containing particles of average size not greater than 50 nm can be obtained with copolyesters having from 6 to 10 mole % of esterified sodium sulphoisophthalic acid and an intrinsic viscosity of from 0.15 to 0.30 dl/g measured at 25°C in a mixture of phenol/o-dichlorobenzene (60/40 by volume).

The aqueous copolyester dispersion used for subbing purposes according to the present invention may be prepared by introducing said copolyester in powder or granular form, optionally together with a dispersing agent, into water and raising the temperature above the glass transition temperature with stirring till a latex is obtained containing dispersed copolyester particles whose preferred mean size is not larger than 50 nm.

By means of said dispersing technique using the above copolyesters from ethylene glycol, and a mixture of isophthalic acid, terephthalic acid and sulphoisophthalic acid (salt form), latexes having a concentration of at least 20% by weight of copolyester can be obtained.

The copolyester latexes according to the invention are particularly suitable for priming a polyester film that can be longitudinally stretched after the coating and drying of the primer layer.

Thus, the present invention includes also any polyester film material coated with the above copolyester from an aqueous dispersion free from organic solvents. A preferred polyester film material used as support, e.g. in photographic material, is polyethylene terephthalate. Although the Examples hereinafter set forth are directed to the subbing of a polyethylene terephthalate film base, other polyester films can be used, e.g. polyesters resulting from the polycondensation of glycol or mixture of glycols, with terephthalic acid or mixtures of terephthalic acid with minor amounts of other dicarboxylic acids such as isophthalic acid, diphenic acid and sebacic acid. The polyester film may contain pigments or dyes and when used as base for X-ray film is, e.g., tinted blue.

The aqueous copolyester dispersion may be applied to the polyester film support either before or after it has been stretched or oriented. Preferably, however, it is applied before longitudinal stretching the film, e.g. in the temperature of from 80 to 100°C with a stretch ratio in the range of 2.5:1 to 4.0:1.

If desired adhesion-improving agents may be incorporated in the aqueous dispersion in dissolved form, e.g. resorcinol, pyrocatechol, dihydroxytoluene, and chloral hydrate. Other useful ingredients that may be added are, e.g., surface-active coating agents, colloidal silica and embossing agents i.e.particles for creating microscopic protrusions of less than 3 µm for obtaining a thin air space between

the subbed material and a material touching it, e.g. during transport of the film. Such embossing agents can be known matting agents, e.g. those described in the European Patent Application 79/200053.1 filed January 30, 1979 by Agfa-Gevaert N.V. After the coating and drying of the aqueous copolyester dispersion forming a primer layer and the longitudinal stretching of the primed polyester film normally a second subbing layer mainly containing gelatin and plasticizer(s) for allowing an easy transversal stretching is coated onto the primer layer before transversal stretching. After drying of the second subbing layer(s) the stretching in transverse direction may be effected, e.g., at a draw of 2.5:1 to 4.0:1.

Thereupon the film is heat-set by heating in the range of 180°C to 220°C for 0.1 to 2 minutes while it is restrained from shrinkage in both directions.

The aqueous gelatin coating composition used for forming the second subbing layer of photographic silver halide materials contains plasticizers that are photographically inert and that have the property of making gelatinous layers stretchable without impairing their transparency as described, e.g. in the United States Patent Specification 3,988,157 of August Jean Van Paesschen and Lucien Janbaptist Van Gossum, issued October 26, 1976. In this respect are mentioned aliphatic polyhydroxy compounds such as glycerol, sorbitol, tri(β-hydroxy-ethyl)-glycerol, 1,1,1-tri(hydroxymethyl)-propane, 2-nitro-2-ethyl-1,3-propanediol, 1,3-dichloro-2-propanol, 1,2,4-butanetriol, 3-hydroxymethyl-2,4-dihydroxypentane, 1,2,6-hexanetriol, 2-hydroxymethyl-4-hydroxyamyl alcohol, glycerol-aldehyde, glycerol dichlorohydrin, and mannitol.

Equally suitable compounds are caprolactam, N,N'-dimethylurea, resorcinol, pyrocatechol, and dichlorodiethyl ether. Other suitable plasticizers are aliphatic carboxylic or sulphonic acids such as malonic acid, glutaric acid, adipic acid, azelaic acid, sebacic acid, mono- and di-chloro-acetic acid, 1,2,3-propene-tricarboxylic acid, trimellitic acid, acrylic acid, methacrylic acid, maleic acid, fumaric acid, itaconic acid, and 2 - sulpho - ethyl methacrylate; further aromatic acids such as phthalic acid, o-sulphobenzoic acid, o-nitrobenzoic acid, o-aminobenzoic acid, p-hydroxybenzoic acid, and salicylic acid.

Moreover, polymeric plasticizers can be added to the gelatin coating composition, e.g. latices of copolymers of butadiene and a lower alkyl ester of acrylic or methacrylic acid e.g. a copolymer of butadiene and methyl methacrylate containing 20-80% by weight of methyl methacrylate. These latices have been described in the United Kingdom Patent Specification 1,053,043 filed January 23, 1964 by Gevaert Photo-Producten N.V.

Hardening agents, spreading agents, antistatic or metal-complexing agents can be also be added to the aqueous gelatin-containing coating composition. Suitable antistatic or metal complexing agents are the sodium salt of polystyrene sulphonic acid, alkali metal salts of co(styrene/maleic acid), inorganic salts such as sodium chloride, potassium chloride, and sodium orthosilicate, further citric acid,sulphosalicylic acid, 2,5-disulphohydroquinone, the sodium salt of ethylenediamine tetraacetic acid, ethanolamino-diacetic acid, the sodium salt of N(o-hydroxybenzyl)-amino-diacetic acid, the monosodium salt of vanadic acid, 3,5-disulphopyrocatechol, phosphono-acetic acid, ethylene-1,2-diphosphonic acid, butylene-1,4-diphosphonic acid, and ascorbic acid.

Other possible ingredients for the second subbing layer are, e.g. surface-active coating aids, colloidal silica, and the already mentioned embossing agents.

After the film base has been heat-set a photographic material may be formed by applying a light-sensitive layer such as a gelatino silver halide emulsion layer optionally directly to the primer layer but preferably onto the second subbing layer mainly containing gelatin. The invention relates to such a silver halide photographic film but is not restricted thereto.

Any of the light-sensitive layers containing a photosensitive substance in a hydrophilic colloid medium can be adhered very well to the present subbed polyester film support. The hydrophilic colloid layer may contain as photosensitive substances photosensitive silver halide grains, photosensitive iron salts or complexes e.g. iron(III)ammonium oxalate or diazonium compounds. Other non-lightsensitive hydrophilic colloid layers e.g. gelatin antihalation layers can be adhered very well to the subbed polyester support.

The composition of the photographic silver halide emulsion layers may be of any type known to those skilled in the art and for their composition preparation and coating reference is made, e.g. to Research Disclosure 17,643 of December 1978.

The preparation of the copolyesters suitable for use according to the invention is illustrated by the following

Preparation of the copolyester of ethylene glycol and a mixture of terephthalic acid, isophthalic acid and 5-sulphoisophthalic acid sodium salt wherein the acids are present in a molar ratio of 53/40/7.

A reaction mixture of :

1028.2 g of dimethyl terephthalate (5.3 moles)
776 g of dimethyl isophthalate (4 moles)
207.2 g of 5-sulphoisophthalic acid dimethyl ester sodium salt (0.7 mole)
1240 g of ethylene glycol (20 moles)
220 mg of zinc acetate dihydrate and
292 mg of antimony(III)oxide

was heated to 160°C whilst stirring in a nitrogen atmosphere.

At that temperature re-esterification took place and methanol was distilled. Gradually the temperature was

raised to 250°C over a period of 3 to 4 h, until no methanol distilled anymore. Thereupon the temperature was further raised to 270-275°C and the reaction mixture subjected to a reduced pressure of 0.1-0.2 mm Hg. Under these conditions the polycondensation took place within a period of 20 to 40 min. After cooling the solidified copolyester was milled and obtained in powder form. Depending on the time of polycondensation the intrinsic viscosity [η] of the copolyester was from 0.15 to 0.30 dl/g measured at a temperature of 25°C in a mixture of phenol and o-dichlorobenzene (60/40 by volume).

The preparation of a stable aqueous copolyester dispersion (latex) for use according to the present invention was carried out as follows :

In a 1-litre round-bottomed flask a mixture of 100 g of the above copolyester in powder or granular form, 20 ml of a 10% by weight solution in water of HOSTAPAL BV (trade name of Farbwerke Hoechst-W.Germany for a 50% by weight aqueous solution of

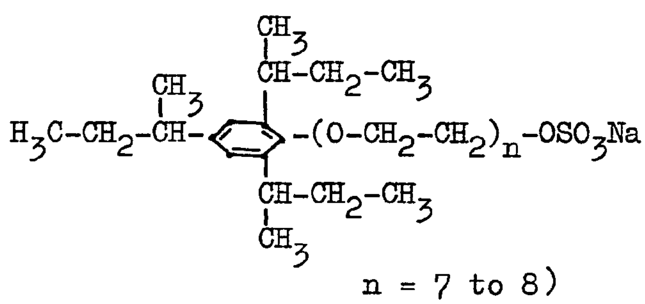

n = 7 to 8)

and 400 ml of water was heated to 95-97°C whilst stirring (stirrer speed about 400 r.p.m.). The mixture was kept at that temperature whilst stirring until the viscosity became equal to or lower than 10 mPa.s at 20°C and the average particle size reached a value equal to or smaller than 50 nm. After cooling to room temperature (20°C) a stable aqueous dispersion of said copolyester was obtained.

For comparative purposes different copolyesters prepared analogously to the above example are listed with their

properties in the following table.

TABLE

| No. of copolyester | Molar ratio of constituents Tere | Iso | Sip | Ets | [η] (dl/g) | T (h) | Latex concentration % by weight | A.S. (nm) | Latex viscosity (mPa s) | Tg (°C) |
|---|---|---|---|---|---|---|---|---|---|---|
| 1 | 53 | 40 | 7 | 100 | 0.275 | 1 | 20.8 | 49 | 3.3 | 72 |
| 2 | 53 | 40 | 7 | 100 | 0.30 | 2 | 21 | 46 | 4.01 | 73 |
| 3 | 53 | 40 | 7 | 100 | 0.355 | 5 | 21.15 | 49 | 4.78 | 73 |
| 4 | 53 | 40 | 7 | 100 | 0.47 | 7 | 21.5 | 110 | 30.7 | 74 |
| 5 | 60 | 33 | 7 | 100 | 0.25 | 1 | 21.62 | 43 | 4.73 | 75 |
| 6 | 73 | 20 | 7 | 100 | 0.28 | 3 | 20.76 | 43 | 4.12 | 76 |
| 7 | 83 | 10 | 7 | 100 | 0.26 | 3 | 20.0 | 50 | 6.35 | 78 |
| 8 | 92 | - | 8 | 100 | 0.20 | ¼ | 20.07 | - | 16.69 | 80 |
| 9 | 33 | 60 | 7 | 100 | 0.26 | 8 | 20.85 | 45 | 3.52 | 63 |
| 10 | - | 93 | 7 | 100 | 0.27 | 8 | 20.7 | 800 | 9.48 | 65 |
| 11 | 54 | 40 | 6 | 100 | 0.34 | 2 | 19.66 | 50 | 3.22 | 73 |
| 12 | 52 | 40 | 8 | 100 | 0.40 | ¼ | 20.57 | < 30 | 6.52 | 71 |
| 13 | 50 | 40 | 10 | 100 | 0.40 | ¼ | 21.97 | < 30 | 8.74 | 80 |
| 14 | 40 | 40 | 20 | 100 | 0.25 | ¼ | 20.95 | - | 4.85 | - |

Tere = terephthalic acid

Iso = isophthalic acid

Sip = 5-sulphoisophthalic acid

Ets = ethylene glycol

[η] = intrinsic viscosity measured at 25°C in a mixture of phenol/o-dichlorobenzene (60/40 by volume)

T = dispersing time in aqueous medium for obtaining the latex.

A.S. = average particle size of the latex.

The copolyesters 1 to 3, 5, 6, 9 and 11 to 13 are suited for use according to the present invention.

The intrinsic viscosity [η] of copolyester No.4 is too high, which results in too large an average particle size.

The copolyester No.7 is less stable in dispersed state

and yields a mat layer on drying.

The copolyester No.8 yields a latex that is not stable and gelifies on standing for 14 days.

The copolyester No.10 yields a latex with too large an average particle size.

The copolyester No.14 yields no latex (dispersion) at all in aqueous medium but a copolyester solution.

The present invention is illustrated by the following examples without, however, limiting it thereto. The ratios and percentages are by weight unless otherwise indicated.

Example 1.

Polyethylene terephthalate was melt-extruded at about 280°C from a slot die onto a rotating drum on which it was quenched to about 75°C to form a film having a thickness of 1.2 mm. The cooled film was coated at both sides at a coverage of 1 litre per 50 sq.m with the following coating mixture :

| | |
|---|---|
| 20% aqueous dispersion of copolyester No.2 | 900 ml |
| 10% aqueous solution of ULTRAVON W (trade name of Ciba-Geigy A.G., Switzerland, for the disodium salt of 2-heptadecylbenzimidazole disulphonic acid) | 5 ml |
| SYTON W3 (trade name of Monsanto Chemical Company, St.Louis, Mo., U.S.A. for a 30% colloidal dispersion of silica in water(average particle size 120 nm)) | 6 ml |
| water up to | 1000 ml. |

After drying the primed film was longitudinally stretched at about 84°C with a draw ratio of 3.5:1 and immediately thereupon cooled in water as described in the British Patent Application No. 79.12.859 filed April 11, 1979 by Agfa-Gevaert N.V.

To both sides of the thus stretched film a layer was applied in a ratio of 1 litre per 100 sq.m. from the following coating composition :

| | |
|---|---|
| gelatin | 25 g |
| malonic acid | 10 g |

10% aqueous solution of AMBITERIC H (trade name of GLOVERS CHEM.LTD. for a 85% by weight aqueous solution of — 10 ml

$$R_1-\overset{+R_2}{\underset{R_4}{N}}-R_3-COO^-$$

$R_1 = C_8-C_{18}$ alkyl

each of $R_2$ and $R_4$ = lower alkyl, $R_3$ = lower alkylene)

urea-formaldehyde-coated silica particles having an average particle size of 2 µm and being prepared as described in the published European Patent Application 79/200053.1 — 0.8 g

water up to — 1000 ml

The pH of the coating composition was adjusted to 8 with ammonia.

After drying with a hot air-stream the coated film was stretched to 3.5 times in the transverse direction at about 80°C and heat-set while kept under tension at 220°C for about 10 s. After heat-setting the subbed film was cooled and wound up on a core.

The film had finally a thickness of about 0.10 mm and was optically clear. The thus double-side subbed polyester film was provided at one side with a gelatino-antihalation layer and at the other side with a gelatin-silver halide emulsion layer as used in the manufacture of a photographic material for application in the graphic arts.

The adhesion in dry state was checked before and after processing (development, rinsing, fixing and washing). The gelatin-containing silver halide emulsion layer was scratched cross-wise by means of a sharp knife, whereafter an adhesive tape that had been pressed thereon was torn off at once. The quality of adhesion prooved to be particularly good because but very small pieces of the photographic layer were torn off.

The adhesion in wet state was checked by scratching the material superficially and trying to rub off the gelatin layer with a finger after each step of the photographic processing (development, rinsing, fixing, rinsing). The gelatin layer was not rubbed off.

Example 2

A melt-extruded amorphous polyethylene terephthalate film having a thickness of 2.2 mm was coated at both sides at a coverage of 1 litre per 50 sq.m. with the following coating mixture :

| | |
|---|---|
| 20 % aqueous dispersion of copolyester No.11 | 900 ml |
| 10% aqueous solution of ULTRAVON W (trade name) | 5 ml |
| water up to | 1000 ml |

After drying the primed film was longitudinally stretched at about 84°C with a draw ratio of 3.5:1 and immediately thereupon cooled in water as described in the British Patent Application No. 791285.9.

To both sides of the thus stretched film a layer was applied in a ratio of 1 litre per 100 sq.m. from the following coating composition :

| | |
|---|---|
| gelatin | 25 g |
| malonic acid | 4 g |
| sorbitol | 10 ml |
| 10% aqueous solution of ULTRAVON W (trade name) | 10 ml |
| water up to | 1000 ml |

The pH of the coating composition was adjusted to 8 with ammonia.

The film was further treated as described in Example 1 and had finally a thickness of 0.180 mm.

The double-side subbed polyester film was provided at both sides with a gelatino-silver halide emulsion layer as used in X-ray film. The adhesion was tested as described in Example 1 and analogous results of adhesion in dry and wet state were obtained.

Example 3

A melt-extruded amorphous polyethylene terephthalate film having a thickness of 1.4 mm was single-side coated at

a coverage of 1 litre per 60 sq.m with the following coating mixture :

| | |
|---|---|
| 25% aqueous dispersion of copolyester No.12 | 900 ml |
| 10% aqueous solution of ULTRAVON W (trade name) | 6 ml |
| SYTON W-30 (trade name) | 6 ml |
| water up to | 1000 ml |

The pH of the coating composition was adjusted to 8 with ammonia.

After drying the primer layer the film was longitudinally stretched at a draw of 3.5:1. Thereupon a subbing layer was applied to the primer layer at a coverage of 1 litre per 100 sq.m from the following coating composition :

| | |
|---|---|
| gelatin | 50 g |
| malonic acid | 2 g |
| 10% aqueous solution of AMBITERIC H (trade name) | 15 ml |
| water up to | 1000 ml |

The pH of the coating composition was adjusted up to 8.

To the non-subbed side an anti-static layer was applied as described in Example 4 of the United States Patent Specification 4,089,997 of August Jean Van Paesschen and Lucien Janbaptist Van Gossum, issued May 16, 1978.

After drying with a hot air-stream and transverse stretching as in Example 1 the film had finally a thickness of 0.12 mm. The subbed side of the film was coated with a gelatino-silver halide emulsion layer suited for the production of black-and-white ciné film.

The adhesion in dry and wet state was tested as described in Example 1 and showed to be good.

WE CLAIM :

1. An aqueous copolyester dispersion suitable for the subbing of polyester film without use of organic solvents characterized in that the copolyester essentially consists of recurring ester groups derived from ethylene glycol and a mixture of terephthalic acid, isophthalic acid and sulphoisophthalic acid whose sulpho group is in salt form, the said acid mixture containing from 20 to 60 mole % of isophthalic acid and from 6 to 10 mole % of said sulphoisophthalic acid, the remainder being terephthalic acid, the copolyester having a glass transition temperature above 45°C and an intrinsic viscosity of from 0.15 to 0.45 dl/g when measured at 25°C in a mixture of phenol/o-dichlorobenzene (60/40 by volume).

2. An aqueous copolyester dispersion according to claim 1, characterized in that the sulpho group is represented by $-SO_3M$ wherein M is an alkali metal or an onium group.

3. An aqueous copolyester dispersion according to claim 1 or 2,characterized in that it containes from 6 to 10 mole % of esterified sulphoisophthalic acid sodium salt and has an intrinsic viscosity of from 0.25 to 0.40 dl/g, measured at 25°C in a mixture of phenol/o-dichlorobenzene (60/40 by volume) and has an average particle size not larger than 50 nm.

4. An aqueous copolyester dispersion according to any of claims 1 to 3, characterized in that it contains the copolyester in a concentration of at least 20% by weight.

5. An aqueous copolyester dispersion according to any of claims 1 to 4, characterized in that it contains a surface-active coating agent, colloidal silica, an embossing agent and/or an adhesion-improving agent.

6. A polyester film characterized in that it contains in direct contact a dried layer of an aqueous copolyester

dispersion of any of claims 1 to 5.

7. A polyester film according to claim 6, characterized in that it has been longitudinally stretched after the coating and drying of said dispersion.

8. A polyester film according to claim 6 or 7, characterized in that it contains on top of said copolyester layer a subbing layer essentially consisting of gelatin and a plasticizing agent therefore.

9. A photographic material containing a photosensitive hydrophilic colloid layer applied to a polyester film of any of claims 6 to 8.

European Patent Office

# EUROPEAN SEARCH REPORT

0029620

Application number

EP 80 20 0989

## DOCUMENTS CONSIDERED TO BE RELEVANT

| Category | Citation of document with indication, where appropriate, of relevant passages | Relevant to claim |
|---|---|---|
| | CHEMICAL ABSTRACTS, vol. 84, no. 8, 23rd February 1976, page 65, no. 45546h<br>Columbus, Ohio, U.S.A.<br>& JP - A - 75 121336 (TORAY INDUSTRIES, INC.) 23-09-1975<br>* Abstract *<br>-- | 1,2 |
| D | DE - A - 2 813 014 (BEXFORD)<br>* Page 7, line 26 - page 10, line 1; page 18, lines 9-23; claims 1-7,12 *<br>-- | 1-9 |
| | US - A - 3 546 008 (D.J. SHIELDS et al.)<br>* Abstract; column 1, line 67 - column 2, line 21; column 4, lines 28-38; example 1 *<br>& NL - A - 69 00157<br>-- | 1,2 |
| A | FR - A - 2 389 158 (DU PONT DE NEMOURS)<br>* Example 1; claims 1,7,8 *<br>& US - A - 4 181 528<br>-- | 1-10 |
| A | CHEMICAL ABSTRACTS, vol. 76, no. 14, 3rd April 1972, page 62, no. 73609j<br>Columbus, Ohio, U.S.A.<br>& CS - A - 138 580 (V. LACKO) 15-10-1970<br>* Abstract *<br>---- | |

CLASSIFICATION OF THE APPLICATION (Int. Cl.3)

C 08 J 7/04
5/18
C 08 G 63/68
C 08 J 3/00
G 03 C 1/80
1/78

TECHNICAL FIELDS SEARCHED (Int. Cl.3)

G 03 C 1/80
1/78
C 08 J 7/04
5/18
C 08 G 63/68
C 08 J 3/00

CATEGORY OF CITED DOCUMENTS

- X: particularly relevant
- A: technological background
- O: non-written disclosure
- P: intermediate document
- T: theory or principle underlying the invention
- E: conflicting application
- D: document cited in the application
- L: citation for other reasons
- &: member of the same patent family, corresponding document

X The present search report has been drawn up for all claims

| Place of search | Date of completion of the search | Examiner |
|---|---|---|
| The Hague | 23-02-1981 | PHILOSOPH |